# EUROPÄISCHE PATENTSCHRIFT

(11) **EP 3 371 358 B1**
(45) Veröffentlichungstag und Bekanntmachung des Hinweises auf die Patenterteilung: **09.09.2020**
(21) Anmeldenummer: 16838059.0
(22) Anmeldetag: 20.12.2016
(51) Int. Cl.: D03D 13/00, D03D 1/00, D03D 49/62, B65G 15/54

(54) **TRANSPORT- ODER ANTRIEBSBAND SOWIE EIN ZU DESSEN HERSTELLUNG GEEIGNETER WEBKAMM**
TRANSPORT OR DRIVE BELT AND WEAVING COMB SUITABLE FOR THE PRODUCTION THEREOF
BANDE TRANSPORTEUSE OU BANDE D'ENTRAÎNEMENT ET PEIGNE DE MÉTIER À TISSER APPROPRIÉ POUR SA FABRICATION

(30) Priorität: 11.01.2016 DE 102016100354
(43) Veröffentlichungstag der Anmeldung: 12.09.2018
(73) Patentinhaber: FORBO SIEGLING GMBH, 30179 Hannover (DE)
(72) Erfinder: BUCH, Torsten, 30900 Wedemark (DE); NEELEN, Neele, 37574 Einbeck (DE); SCHULZ, Lennart, 30449 Hannover (DE)
(74) Vertreter: Scheffler, Jörg
(86) Internationale Anmeldenummer: PCT/EP2016/081863
(87) Internationale Veröffentlichungsnummer: WO 2017/121582

(56) Entgegenhaltungen:
- CH-A- 411 739
- CN-U- 202 730 381
- DE-A1-102009 034 299
- DE-C- 580 631
- DE-C1- 19 543 975
- US-A1- 2009 007 981

## Beschreibung

Die Erfindung betrifft ein Transport- oder Antriebsband mit in Längsrichtung verlaufenden Kettfäden und zwischen den gegenüberliegenden Seitenrändern verlaufenden Schussfäden.

Derartige Transport- oder Antriebsbänder bestehen aus einem textilen Flächengebilde aus insbesondere mehreren Schichten, wobei der Schichtaufbau je nach Anwendungszweck und den dabei auftretenden Anforderungen erheblich variieren kann. Ein typischer Aufbau eines solchen Transport- oder Antriebsbandes umfasst den aus Kett- und Schussfäden bestehenden Zugträger zur Übertragung der im Betrieb wirkenden Kräfte, eine Tragschicht als Auflagefläche für das Transportgut und eine als Kontaktfläche zu einer Auflage dienende Lauffläche.

Jeder einzelne Kettfaden muss durch eine Litze und durch das Webblatt (Riet) geführt werden, bevor er auf dem sogenannten Warenbaum des Webstuhls angebunden werden kann. Beim Weben wächst durch den Eintrag von Schussfäden im rechten Winkel zu den Kettfäden das Gewebe.

Die Kettfäden sind durch die Litzen, durch die sie verlaufen, unterschiedlichen Schäften zugeordnet. Durch das Heben und Senken der Webschäfte werden einzelne Kettfäden angehoben oder abgesenkt, um das Webfach zu bilden. Die Kombination der Kettfäden, die gleichzeitig angehoben oder abgesenkt werden, sowie die Abfolge, in der unterschiedliche Kombinationen von Kettfäden nacheinander angehoben oder abgesenkt werden, bestimmt die Bindung des Gewebes.

Mit Hilfe eines auch als Webkamm bezeichneten Riets wird jeder Schussfaden fest an das bisher fertig gestellte Flächengebilde angeschlagen. Solche Weberkämme bestehen aus einer großen Anzahl von zueinander parallelen Haltern, die zwischen sich Schlitze bilden, durch welche die Kettfäden hindurchlaufen. Weberkämme müssen an die jeweiligen Anforderungen angepasst werden und sind daher in vielfältigen Ausführungsformen bekannt. So ist beispielsweise aus der DE 1 535 153 A ein Webkamm mit veränderlichem Abstand bekannt.

Zu den drei Grundbindungen gehören die Leinwandbindung als einfachste Bindungsart, bei welcher der Schuss abwechselnd über und unter den einzelnen Kettfäden hindurchgeht, die Atlasbindung sowie die Köperbindung, bei welcher der Schuss unter mindestens einem Kettfaden hindurch- und danach über mindestens zwei Kettfäden hinweggeführt ist. Der nächste Schussfaden verlagert diesen Rhythmus seitlich, sodass ein typisches Diagonalmuster entsteht, welches als Köpergrat oder Diagonalgrat bezeichnet wird.

Grundsätzlich gilt für alle Bindungsarten bei derartigen Transport- oder Antriebsbändern, dass die Schussfäden mit möglichst hoher Genauigkeit in einem rechten Winkel zu den Kettfäden verlaufen sollen. Dabei bildet insbesondere der rechtwinklige Verlauf ein Qualitätsmerkmal des Transport- oder Antriebsbandes, weil ein abweichender Verlauf der Schussfäden dazu führen kann, dass das Transport- oder Antriebsband seitlich auswandert und das Zentrieren auf einer Auflage, insbesondere auf einer Umlenkrolle oder Tragrolle wesentlich erschwert.

Bei der Verwendung solcher Transport- oder Antriebsbänder in von Personen zugänglichen Bereichen, beispielsweise Personentransportbänden innerhalb von Gebäuden oder Laufbänden im Fitnessbereich, wirkt sich die dabei auftretende Geräuschentwicklung nachteilig aus. Insbesondere eine hochfrequente akustische Schwingung wird dabei von Personen als unangenehm empfunden.

Es ist schon daran gedacht worden, den Schichtbau des Transport- oder Antriebsbandes durch eine zusätzliche Dämpfungsschicht zu verändern, sodass eine verbesserte akustische Dämpfungswirkung realisiert oder zumindest die Frequenz der Schwingung in einen anderen Bereich verlagert wird. Dies führt jedoch zu unerwünscht erhöhten Herstellkosten.

Aus der EP 0 775 648 A2 ist ein Transportband mit einem Laufseitengewebe bekannt, das Stapelfasergarn enthält, und das eine Köperbindung mit einem Steigungswinkel von 10° bis 70° zur Laufrichtung des Transportbandes aufweist. Die Kettfäden sind von Stapelfasern ummantelt und verlaufen diagonal über die volle Breite des Laufbandes, wodurch sich auch bei einem Kantenablauf eine endlose Auflage des Stapelfasergarns ergibt. Dadurch wird ein gleichförmiger, schwingungsfreier und geräuscharmer Lauf des Transportbandes erreicht. Das Laufseitengewebe kann hierzu insbesondere eine Spitzköperbindung oder eine Köperbindung in Fischgratanordnung aufweisen.

Ferner ist aus der DE 10 2009 034 299 A1 bereits ein als Siebdruckgewebe einsetzbares Drahtgewebe mit einer Vielzahl von Kettdrähten und Schussdrähten bekannt, bei dem der Drahtkreuzungswinkel der Kettdrähte und der Schussdrähte um mehr als 3° von einem rechten Winkel abweicht. Gemäß einer Variante kann das Drahtgewebe über zwei Gewebeabschnitte verfügen, die spiegelsymmetrisch zu einem mittleren Kettdraht ausgeführt sind. Das hierzu eingesetzt Webeblatt ist entsprechend symmetrisch ausgeführt.

Der Erfindung liegt die Aufgabe zugrunde, eine Möglichkeit zu schaffen, die unerwünschte Geräuschentwicklung im Betrieb des Transport- oder Antriebsbandes zu reduzieren, ohne dass hierzu eine zusätzliche Dämpfungsschicht oder schallmindernde Beschichtung des Transport- oder Antriebsbandes erforderlich ist. Weiterhin liegt der Erfindung die Aufgabe zugrunde, einen zur Herstellung eines solchen Transport- oder Antriebsbandes bestimmten Webkamm zu schaffen.

Außerdem offenbaren die DE 580 631 C sowie die CH 411 739 A bereits Schussfäden, die einem wellenförmigen Verlauf folgen.

Die erstgenannte Aufgabe wird erfindungsgemäß mit einem Transport- oder Antriebsband gemäß den Merkmalen des Anspruches 1 gelöst. Die weitere Ausgestaltung der Erfindung ist den Unteransprüchen zu entnehmen.

Erfindungsgemäß wird also ein Transport- oder Antriebsband vorgeschlagen, bei dem die Schussfäden in der Haupterstreckungsebene des Transport- oder Antriebsbandes zumindest abschnittsweise abweichend von einer zu den Kettfäden rechtwinkligen Geraden mit einer abschnittsweise positiven und negativen Steigung gegenüber der kürzesten Verbindung zwischen den Seitenrändern verlaufen, wobei die Schussfäden einem wellenförmigen Verlauf folgen. Der Erfindung liegt die überraschend einfache Erkenntnis zugrunde, dass die unerwünschte Geräuschentwicklung dadurch signifikant und wirksam ohne einen zusätzlichen Materialeinsatz, insbesondere ohne eine Dämpfungsschicht erreicht werden kann, wenn bei der Bewegung des Transport- oder Antriebsbandes auf einer Auflage, beispielsweise eine Führung, eine Unterlage oder eine Rolle, der jeweilige Schussfaden nicht über die gesamte Breite zeitgleich auf die Auflage auftrifft, sondern bezogen auf unterschiedliche Abschnitte in Richtung der Gesamtbreite des Transport- oder Antriebsbandes mit einer zeitlichen Verzögerung. Dieser Effekt wird durch einen zumindest in einzelnen Abschnitten vorzugsweise in gegensätzliche Richtungen geneigten Verlauf der Schussfäden gegenüber der Querstreckung zu den Kettfäden erreicht, indem die Schussfäden eine Steigung gegenüber der kürzesten Verbindungsgeraden der Seitenränder aufweisen. Hierdurch wird ein zeitgleiches Auftreffen eines jeweiligen Schussfadens über die gesamte Bereite der Rolle oder einer plattenförmigen Auflage vermieden. Obwohl der der Schallentwicklung zugrundeliegende physikalische Effekt noch nicht vollständig verstanden ist wird derzeit davon ausgegangen, dass diese in dem auch als Zwickel bezeichneten Spaltbereich zwischen dem Transport- oder Antriebsband und der Auflage entsteht. Dabei schließen beim Stand der Technik die Schussfäden, die gegenüber einer der Auflage zugewandten Außenfläche des Transport- oder Antriebsbandes hervortreten, kurz vor dem Auftreffen des Transport- oder Antriebsbandes auf die Auflage mit diesem ein Luftvolumen ein, welches in dem sich schließenden Spalt schlagartig verdrängt wird. Infolgedessen kommt es zu einer periodischen Luftschwingung, die zu der unerwünschten Geräuschentwicklung führt. Durch den erfindungsgemäß geneigten Verlauf der Schussfäden, wird das eingeschlossene Luftvolumen seitlich parallel zur Achsrichtung der Auflage verdrängt und entweicht somit kontinuierlich. Eine periodische Schwingungsanregung wird auf diese Weise wirkungsvoll vermieden, wobei die Schussfäden einem wellenförmigen oder kurvenförmigen Verlauf, insbesondere mit Amplituden beiderseits einer zu den Kettfäden rechtwinkligen Geraden, folgen. Mit der Wellenform verbunden ist eine kontinuierliche Veränderung des Steigungswinkels, wodurch unerwünschte schlagartige Richtungsänderungen vermieden werden können. Insbesondere wird durch eine mehrfache Umkehrung der Neigung das eingeschlossene Luftvolumen in dem Zwickel periodisch größer und kleiner, was einer Schwingungsanregung effektiv entgegen wirkt.

Eine besonders vorteilhafte Ausgestaltung wird auch dadurch erreicht, dass die Schussfäden zwischen den Rändern zumindest einen ersten Bereich mit einer eine Richtungskomponente in Laufrichtung aufweisenden positiven Neigung und einen zweiten Bereich mit einer eine Richtungskomponente gegenüber der Laufrichtung aufweisenden negativen Neigung haben, sodass eine mögliche seitliche Auslenkung des Transport- oder Antriebsbandes aufgrund des geneigten Verlaufs der Schussfäden durch die jeweils in dem ersten und zweiten Bereich entgegengesetzte Neigung ausgeglichen wird. Dabei ist der Steigungswinkel bezogen auf die Querachse des Transport- oder Antriebsbandes als kürzeste Verbindungslinie zwischen den Seitenrändern vorzugsweise übereinstimmend bemessen.

Ebenso hat es sich als vorteilhaft erwiesen, wenn die Bereiche mit positivem Steigungswinkel und die Bereiche mit negativem Steigungswinkel gleich groß sind, um so die das Transport- oder Antriebsband anderenfalls seitlich auslenkenden Kräfte gegeneinander aufzuheben.

Darüber hinaus kann es je nach Anwendungszweck sinnvoll sein, die Bereiche mit positivem Steigungswinkel und die Bereiche mit negativem Steigungswinkel unterschiedlich groß auszuführen. Es sind Anwendungen denkbar, bei denen beispielsweise bedingt durch eine fortwährende seitliche Einschleusung, eine seitlich geneigte Transportfläche oder schiefgestellte Umlenk- oder Tragrollen ein permanenter Schieflauf des Transportbandes resultieren würde. Für solche Anwendungen wird die erforderliche Zwangsführung bislang beispielsweise über verstärkte Bandkanten mit aufgenähter Wulst realisiert. Diese könnten durch gezielt ungleich verteilt ausgeführte Webstrukturen, welche einen permanenten Schieflauf auslösen, substituiert werden.

Dabei hat sich bereits gezeigt, dass ein regelmäßig gewellter Verlauf der Schussfäden, also ein Verlauf der Schussfäden mit konstanter Wellenlänge sowie Amplitude zur Vermeidung einer ungleichmäßigen Kraftübertragung zwischen dem Transport- oder Antriebsband einerseits und der Auflage andererseits besonders günstig ist. Zudem kann das Transport- oder Antriebsband so bedarfsweise auch in Längsrichtung geschnitten und die Gesamtbreite schrittweise reduziert werden, ohne dass die vorteilhaften Eigenschaften des wellenförmigen Verlaufes der Schussfäden verändert werden.

Die Schussfäden könnten in einem Zick-Zack-Verlauf zwischen den Seitenrändern verlaufen. Bei einer weiteren, ebenfalls besonders Erfolg versprechenden Ausgestaltungsform der Erfindung verlaufen die Schussfäden stetig zwischen den Seitenrändern, sodass insbesondere Sprungstellen vermieden werden, an denen es zu einer Richtungsumkehr der Schussfäden und damit einhergehend zu einem akustisch wahrnehmbaren Auftreffen auf der Auflage kommt.

Eine andere, ebenfalls besonders praxisnahe Abwandlung der vorliegenden Erfindung wird auch dadurch erreicht, dass benachbarte Schussfäden einen konstanten Abstand voneinander, insbesondere über die gesamte Breite des Transport- oder Antriebsbandes, aufweisen, sodass sich ein wiederkehrendes Bild der Schussfäden in der Ebene des Transport- oder Antriebsbandes ergibt. In Richtung der Hauptachse des Transport- oder Antriebsbandes ist somit der Abstand jedes Schussfadens von dem vorhergehenden und dem nachfolgenden Schussfaden identisch.

Bei einer anderen, besonders Erfolg versprechenden Ausführungsform der Erfindung ist der Abstand eines Schussfadens von einem benachbarten Schussfaden in Richtung der Mittellängsachse des Transport- oder Antriebsbandes geringer als die Amplitude des Schussfadens. Dadurch wird sichergestellt, dass in jeder Betriebsphase zumindest ein Schussfaden in Kontakt mit der Auflage ist. Somit kommt es auch bei solchen Schussfäden, die deutlich gegenüber der Oberfläche des Transport- oder Antriebsbandes hervorstehen, nicht zu einem plötzlichen Anheben des Transport- oder Antriebsbandes gegenüber der Auflage, weil das Transport- oder Antriebsband stets mittels eines oder mehrerer Schussfäden auf der Auflage aufliegt. Kurz vor Erreichen der Amplitudenhöhe entgegen der Bewegungsrichtung des Transport- und Antriebsbands des gewellt verlaufenden Schussfadens, trifft somit bereits die Amplitudenhöhe des nachfolgenden Schussfadens auf die Auflage.

Weiterhin kann es vorteilhaft sein, wenn der Abstand von zumindest zwei Schussfäden von den Abständen der übrigen Schussfäden abweichend bemessen ist. Hierdurch werden durch ein vorbestimmtes, aperiodisches Auftreffen des Schussfadens eine periodisch wiederkehrende Luftströmung und eine damit möglicherweise einhergehende Schwingungsanregung vermieden. Vorzugsweise beträgt dabei der Abstand benachbarter Schussfäden zwischen 0,5 mm und 25 mm, insbesondere zwischen 5 mm und 15 mm.

Die erfindungsgemäße Aufgabe wird weiterhin mit einem Transport- oder Antriebsband mit einander rechtwinklig kreuzenden Kettfäden und Schussfaden nach Anspruch 9 gelöst. Die Kett- und Schussfäden sind durch eine Köper-Bindung des Gewebes mit einem Diagonalmuster verbunden, sodass die Flottierungen über die Breite des Transport- oder Antriebsbandes gesehen in Richtung der Kettfäden einen Versatz aufweisen. Die Neigung bzw. Steigung des Diagonalmusters als virtuelle Verbindungslinie der jeweiligen Mittelpunkte der Flottierung weist über die Breite des Transport- oder Antriebsbandes zwischen den Seitenrändern zumindest einmal eine Umkehrung auf und die Länge der Flottierung zwischen den Seitenrändern ist zumindest abschnittsweise unterschiedlich | bemessen. Dadurch wird bei der an sich bekannten Köperbindung die so genannte Flottierung, als Fadenstrecke, die ohne Bindung als Kettfaden über einer Anzahl von Schussfäden liegt, und die dadurch entsteht, dass der nachfolgende Schussfaden um mindestens einen Kettfaden versetzt angeordnet ist, ein Schrägeffekt erreicht, sodass ein diagonal verlaufender Grat erzeugt wird, dessen Steigung bezogen auf den Verlauf der Schussfäden eine Steigung aufweist, also geneigt verläuft. Dabei wird die Köperbindung derart ausgeführt, dass die Steigung des Grates in einem ersten Bereich positiv und in einem zweiten Bereich negativ verläuft, um so den gewünschten Effekt eines über die Breite der Auflage variierenden Anlaufpunktes zu realisieren. Somit ist der Versatz benachbarter Flottierungen nicht konstant sondern variiert zumindest in einem Umkehrpunkt. Durch die unterschiedliche Länge der Flottierung zwischen den Seitenrändern über die Breite ist die Länge der Flottierung insbesondere in einem die Mittellängsachse des Transport- oder Antriebsbandes einschließenden Bereich kürzer als den den Seitenrändern jeweils benachbarten Bereichen bemessen. Auf diese Weise variiert im Betrieb über die Breite des Transport- oder Antriebsbandes nicht nur der Zeitpunkt des Auftreffens der Flottierung auf die Auflage, sondern darüber hinaus auch aufgrund der unterschiedlichen Länge der Flottierung die Dauer des Kontaktes mit der Auflage. Durch den gewellten Verlauf des Grates ergeben sich über die Breite einer Umlenkrolle oder einer Auflagefläche im zeitlichen Verlauf unterschiedliche Anlaufpunkte der

Schussfäden, sodass das eingeschlossene Luftvolumen in Querrichtung zu der Transportrichtung verdrängt werden kann und somit zyklische bzw. schlagartige Luftentweichungen zugunsten eines kontinuierlichen Verdrängungsprozesses vermieden werden können.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung in
- Fig. 1: eine Draufsicht auf ein erfindungsgemäßes Transport- oder Antriebsband mit einem gewellten Verlauf der Schussfäden auf einer Auflage;
- Fig. 2: das in Figur 1 gezeigte Transport- oder Antriebsband in einem Querschnitt;
- Fig. 3: eine Variante eines Transport- oder Antriebsbandes mit einer Köperbindung.

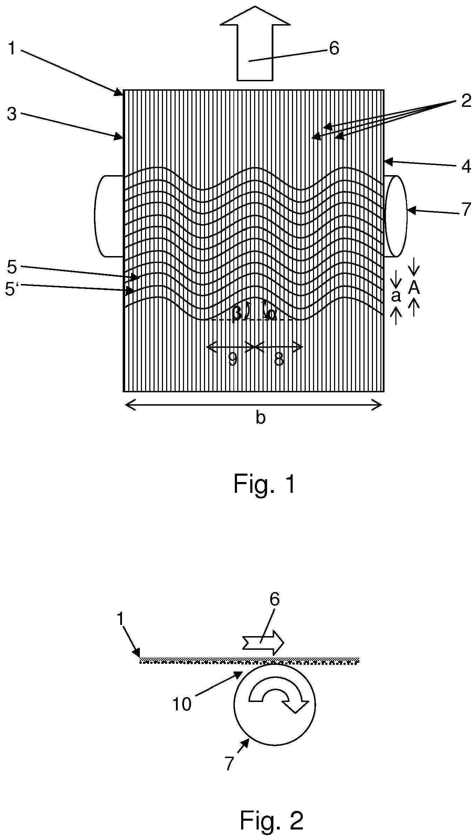

Figur 1 zeigt eine Draufsicht auf ein erfindungsgemäßes Transportband 1 mit in Längsrichtung verlaufenden Kettfäden 2 und zwischen den Seitenrändern 3, 4 verlaufenden Schussfäden 5. Die Schussfäden 5 sind in der Haupterstreckungsebene des Transportbandes 1 angeordnet und folgen einem gewellten Verlauf, sodass sich zumindest abschnittsweise abweichend von einer zu den Kettfäden 2 rechtwinkligen Geraden abschnittsweise eine positive Steigung α gegenüber der Bewegungsrichtung 6 und eine negative Steigung β gegenüber der Bewegungsrichtung 6 ergibt. Dadurch trifft bei der Bewegung des Transportbandes 1 auf die hier als Führungsrolle ausgeführte Auflage 7 der jeweilige Schussfaden 5 nicht über seine gesamte Breite b zeitgleich auf die Auflage 7, sondern zeitlich verzögert bezogen auf unterschiedliche Bereiche 8, 9 als Breitenabschnitte des Transportbandes 1, wobei der Bereich 8 der positiven Steigung α und der Bereich 9 der negativen Steigung β entspricht.

Wie insbesondere in Verbindung mit Figur 2 erkennbar, wird hierdurch die Luft in dem auch als Zwickel bezeichneten Spaltbereich 10 zwischen dem Transportband 1 und der Auflage 7 seitlich verdrängt und entweicht insbesondere anders als beim Stand der Technik nicht schlagartig. Somit wird eine Hauptursache der Schwingungsanregung vermieden und eine effiziente Reduzierung der Geräuschentwicklung erreicht. Indem der Abstand a eines Schussfadens 5 von einem benachbarten Schussfaden 5' in Richtung der Kettfäden 2 geringer ist als die Amplitude A des jeweiligen Schussfadens 5, erfolgt auch der Übergang von einem Schussfaden 5 auf den nachfolgenden Schussfaden 5' ohne eine Unterbrechung. Vielmehr liegt stets zumindest ein Bereich 8, 9 zumindest eines Schussfadens 5, 5' gegen die Auflage 7 an.

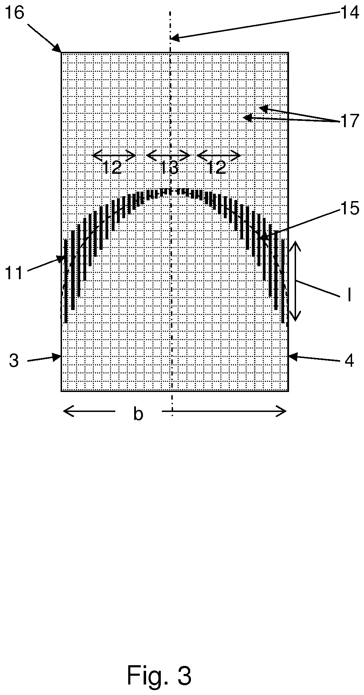

In Figur 3 ist ergänzend noch eine Variante eines Transportbandes 16 dargestellt, bei der die Kettfäden 2 und die Schussfäden 17 einander rechtwinklig kreuzen und durch eine Köper-Bindung des Gewebes in einem Diagonalmuster verbunden sind. Die als Flottierung 11 bezeichneten Bereiche zwischen den Seitenrändern 3, 4, die ohne Bindung der Kettfäden 2 über einer Anzahl von Schussfäden 17 liegt, weisen somit über die Breite b des Transportbandes 16 einen Versatz in Richtung der Kettfäden 2 auf. Indem die Länge I der Flottierung zwischen den Seitenrändern 3, 4 variiert und in dem jeweiligen den Seitenrändern 3, 4 zugewandten Bereich 12 länger ist als in einem Bereich 13 nahe einer Mittellängsachse 14, folgt die Steigung α des Diagonalmusters einer als Grat bezeichneten virtuellen Verbindungslinie 15 der jeweiligen Mittelpunkte der Flottierung 11 über die Breite b des Transportbandes 16 zwischen den Seitenrändern 3, 4 einem gewellten Verlauf mit einer hier lediglich bespielhaft dargestellten Umkehrstelle im Bereich der Mittellängsachse 14, um so den gewünschten Effekt eines über die Breite (b) der Auflage 7 variierenden Anlaufpunktes zu realisieren. Somit ist auch der Versatz benachbarter Flottierungen 11 nicht konstant, sondern variiert im Verlauf zwischen den Seitenrändern 3, 4.

**BEZUGSZEICHENLISTE**

| | | | |
|---|---|---|---|
| 1 | Transportband | 16 | Transportband |
| 2 | Kettfaden | 17 | Schussfaden |
| 3 | Seitenrand | | |
| 4 | Seitenrand | | |
| 5, 5' | Schussfaden | | |
| | | | |
| 6 | Bewegungsrichtung | | |
| 7 | Auflage | α | Steigung |
| 8 | Bereich | β | Steigung |
| 9 | Bereich | b | Breite |
| 10 | Spaltbereich | a | Abstand |
| | | A | Amplitude |
| 11 | Flottierung | I | Länge |
| 12 | Bereich | | |
| 13 | Bereich | | |
| 14 | Mittellängsachse | | |
| 15 | Verbindungslinie | | |

## Patentansprüche

1. Transport- oder Antriebsband (1) mit in Richtung einer Mittellängsachse (14) verlaufenden Kettfäden (2) und zwischen gegenüberliegenden Seitenrändern (3, 4) verlaufenden Schussfäden (5, 5'), **dadurch gekennzeichnet, dass** die Schussfäden (5, 5') und die Kettfäden (2) einander zumindest abschnittsweise mit einer positiven Steigung (α) oder einer negativen Steigung (β) abweichend von einem rechten Winkel kreuzen und dass die Schussfäden (5, 5') einem wellenförmigen Verlauf folgen

2. Transport- oder Antriebsband (1) nach Anspruch 1, **dadurch gekennzeichnet, dass** die Schussfäden (5, 5') zwischen den Seitenrändern (3, 4) zumindest einen ersten Bereich (8) mit einer eine Richtungskomponente gegenüber der Bewegungsrichtung (6) des Transport- oder Antriebsbandes (1) aufweisenden positiven Steigung (α) und einen zweiten Bereich (9) mit einer eine Richtungskomponente gegenüber der Bewegungsrichtung (6) des Transport- oder Antriebsbandes (1) aufweisenden negativen Steigung (β) aufweisen.

3. Transport- oder Antriebsband (1) nach den Ansprüchen 1 oder 2, **dadurch gekennzeichnet, dass** die Schussfäden (5, 5') einem regelmäßigen wellenförmigen Verlauf folgen.

4. Transport- oder Antriebsband (1) nach zumindest einem der vorhergehenden Ansprüche, **dadurch gekennzeichnet, dass** die Schussfäden (5, 5') symmetrisch zu einer Mittellängsachse (14) verlaufen.

5. Transport- oder Antriebsband (1) nach zumindest einem der vorhergehenden Ansprüche, **dadurch gekennzeichnet, dass** die Schussfäden (5, 5') zur Vermeidung von Sprungstellen stetig zwischen den Seitenrändern (3, 4) verlaufen.

6. Transport- oder Antriebsband (1) nach zumindest einem der vorhergehenden Ansprüche, **dadurch gekennzeichnet, dass** benachbarte Schussfäden (5, 5') einen konstanten Abstand (a) voneinander, insbesondere über die gesamte Breite (b) des Transport- oder Antriebsbandes (1), aufweisen.

7. Transport- oder Antriebsband (1) nach zumindest einem der vorhergehenden Ansprüche, **dadurch gekennzeichnet, dass** der Abstand (a) eines Schussfadens (5) von einem benachbarten Schussfaden (5') geringer ist als die Amplitude (A) des Schussfadens (5, 5').

8. Transport- oder Antriebsband (1) nach Anspruch 1, **dadurch gekennzeichnet, dass** der Abstand (a) von zumindest zwei Schussfäden (5, 5') von den Abständen (a) der übrigen Schussfäden (5, 5') abweichend bemessen ist.

9. Transport- oder Antriebsband (16) mit einander rechtwinklig kreuzenden Kettfäden (2) und Schussfäden (17), die durch eine Köper-Bindung des Gewebes verbunden sind, wobei eine negative und/oder eine positive Steigung (α, β) eines Grates (Verbindungslinie 15) der Köper-Bindung über die Breite (b) des Transport- oder Antriebsbandes (16) zwischen den Seitenrändern (3, 4) zumindest einmal eine Umkehrung aufweist, **dadurch gekennzeichnet, dass** die Länge (I) der Flottierung (11) zwischen den Seitenrändern (3, 4) zumindest abschnittsweise unterschiedlich bemessen ist.

10. Transport- oder Antriebsband (16) nach Anspruch 9, **dadurch gekennzeichnet, dass** zumindest einzelne, benachbarte Flottierungen (11) einen Versatz in Richtung der Mittellängsachse (14) aufweisen.

## Claims

1. Transport or drive belt (1) having warp threads (2) extending in the direction of a central longitudinal axis (14) and weft threads (5, 5') extending between opposite side edges (3, 4), **characterized in that** the weft threads (5, 5') and the warp threads (2) cross one another, at least in some regions, with a positive gradient (a) or a negative gradient (β) deviating from a right angle, and **in that** the weft threads (5, 5') follow a wavy course.

2. Transport or drive belt (1) according to Claim 1, **characterized in that** the weft threads (5) 5') between the side edges (3, 4) have at least one first region (8) with a positive gradient (a) having a directional component counter to the direction of movement (6) of the transport or drive belt (1), and a second region (9) with a negative gradient (β) having a directional component counter to the direction of movement (6) of the transport or drive belt (1).

3. Transport or drive belt (1) according to Claims 1 or 2, **characterized in that** the weft threads (5, 5') follow a regular wavy course.

4. Transport or drive belt (1) according to a least one of the preceding claims, **characterized in that** the weft threads (5, 5') extend symmetrically relative to a central longitudinal axis (14).

5. Transport or drive belt (1) according to at least one of the preceding claims, **characterized in that** the weft threads (5, 5') extend continuously between the side edges (3, 4) in order to avoid discontinuities.

6. Transport or drive belt (1) according to at least one of the preceding claims, **characterized in that** adjacent weft threads (5, 5') have a constant spacing (a) from one another, in particular over the entire width (b) of the transport or drive belt (1).

7. Transport or drive belt (1) according to at least one of the preceding claims, **characterized in that** the spacing (a) of a weft thread (5) from an adjacent weft thread (5') is smaller than the amplitude (A) of the weft thread (5, 5').

8. Transport or drive belt (1) according to Claim 1, **characterized in that** the spacing (a) of at least two weft threads (5, 5') is dimensioned differently from the spacing (a) of the remaining weft threads (5, 5').

9. Transport or drive belt (16) having warp threads (2) and weft threads (17) which cross one another at right angles and which are connected by a twill weave of the fabric, wherein a negative and/or a positive gradient (α, β) of a ridge (connecting line 15) of the twill weave undergoes an inversion at least once over the width (b) of the transport or drive belt (16) between the side edges (3, 4), **characterized in that** the length (L) of the float (11) between the side edges (3, 4) is dimensioned differently, at least in some regions.

10. Transport or drive belt (16) according to Claim 9, **characterized in that** at least individual adjacent floats (11) have an offset in the direction of the central longitudinal axis (14).

## Revendications

1. Bande transporteuse ou bande d'entraînement (1) dotée de fils de chaîne (2) s'étendant dans le sens d'un axe longitudinal central (14) et de fils de trame (5, 5') s'étendant entre des bords latéraux (3, 4) opposés, **caractérisée en ce que** les fils de trame (5, 5') et les fils de chaîne (2) se croisent au moins par endroits avec une pente positive (a) ou une pente négative (β) différente d'un angle droit, et **en ce que** les fils de trame (5, 5') suivent un tracé ondulé.

2. Bande transporteuse ou bande d'entraînement (1) selon la revendication 1, **caractérisée en ce que** les fils de trame (5, 5') présentent entre les bords latéraux (3, 4) au moins une première zone (8) ayant une pente positive (a) présentant une composante directionnelle par rapport au sens de la marche (6) de la bande transporteuse ou bande d'entraînement (1), et une deuxième zone (9) ayant une pente négative (β) présentant une composante directionnelle par rapport au sens de la marche (6) de la bande transporteuse ou bande d'entraînement (1).

3. Bande transporteuse ou bande d'entraînement (1) selon l'une quelconque des revendications 1 ou 2, **caractérisée en ce que** les fils de trame (5, 5') suivent un tracé ondulé régulier.

4. Bande transporteuse ou bande d'entraînement (1) selon au moins l'une des revendications précédentes, **caractérisée en ce que** les fils de trame (5, 5') s'étendent de manière symétrique à un axe longitudinal central (14).

5. Bande transporteuse ou bande d'entraînement (1) selon au moins l'une des revendications précédentes, **caractérisée en ce que** les fils de trame (5, 5') s'étendent entre les bords latéraux (3, 4) en continu pour éviter des points de discontinuité.

6. Bande transporteuse ou bande d'entraînement (1) selon au moins l'une des revendications précédentes, **caractérisée en ce que** des fils de trame voisins (5, 5') présentent une distance constante (a) les uns par rapport aux autres, en particulier sur toute la largeur (b) de la bande transporteuse ou bande d'entraînement (1) .

7. Bande transporteuse ou bande d'entraînement (1) selon au moins l'une des revendications précédentes, **caractérisée en ce que** la distance (a) entre un fil de trame (5) et un fil de trame voisin (5') est inférieure à l'amplitude (A) du fil de trame (5, 5').

8. Bande transporteuse ou bande d'entraînement (1) selon la revendication 1, **caractérisée en ce que** la distance (a) d'au moins deux fils de trame (5, 5') est d'une dimension différente des distances (a) des autres fils de trame (5, 5').

9. Bande transporteuse ou bande d'entraînement (16) dotée de fils de chaîne (2) et de fils de trame (17) qui se croisent perpendiculairement et sont reliés par une armure croisée du tissu, dans laquelle une pente négative et/ou positive (α, β) d'une arête (ligne de connexion 15) de l'armure croisée présente sur la largeur (b) de la bande transporteuse ou bande d'entraînement (16) au moins une fois une inversion entre les bords latéraux (3, 4), **caractérisée en ce que** la longueur (1) du flotté (11) entre les bords latéraux (3, 4) est d'une dimension différente au moins par endroits.

10. Bande transporteuse ou bande d'entraînement (16) selon la revendication 9, **caractérisée en ce qu'**au moins des flottés voisins (11) individuels présentent un décalage en direction de l'axe longitudinal central (14) .
